# EUROPEAN PATENT SPECIFICATION

(11) **EP 2 318 242 B1**
(45) Date of publication and mention of the grant of the patent: **04.01.2012**
(21) Application number: 09785310.5
(22) Date of filing: 10.07.2009
(51) Int. Cl.: B60T 7/20, B60T 17/22, B62D 53/10

(54) **BRAKING CONTROL SYSTEM FOR A TOWING VEHICLE AND TRAILER VEHICLE COMBINATION**
BREMSSTEUERSYSTEM FÜR EINE KOMBINATION AUS ZIEHENDEM FAHRZEUG UND ANHÄNGERFAHRZEUG
SYSTÈME DE COMMANDE DE FREINAGE POUR VÉHICULE DE REMORQUAGE ET VÉHICULE-REMORQUE ASSOCIÉS

(30) Priority: 16.07.2008 GB 0812979
(43) Date of publication of application: 11.05.2011
(73) Proprietor: Standen, John Paul, Woodford Halse Northampton Northamptonshire NN11 3TT (GB)
(72) Inventor: Standen, John Paul, Woodford Halse Northampton Northamptonshire NN11 3TT (GB)
(74) Representative: Loven, Keith James
(86) International application number: PCT/GB2009/050832
(87) International publication number: WO 2010/007407

(56) References cited:
- WO-A-03/020561
- DE-A1- 3 803 931
- DE-A1- 4 235 539
- JP-A- 8 268 015
- US-A1- 2008 012 695

## Description

### Field of the Invention

This invention relates to a braking control system for a towing vehicle and trailer vehicle combination, for example for eliminating unexpected vehicle movements when coupling or uncoupling the semi-trailer of an articulated vehicle and reducing the possibility of a semi-trailer detaching from the tractor unit in the event of a fifth-wheel lock failure when the vehicle is moving.

### Background to the Invention

Articulated vehicles comprising a tractor unit and semi-trailer are typically coupled together by means of a king-pin extending downwards from the underside of the semi-trailer which engages and locks within a fifth-wheel mechanism attached to the tractor unit. The locking method comprising a fixed socket within the fifth-wheel and moveable jaws which encircle the semi-trailer king-pin and lock closed to retain it within the socket. A release arm is provided to unlock the jaws and allow the king-pin to exit the fifth-wheel socket to uncouple the semi-trailer from the tractor unit.

Electrical and pneumatic services from the tractor unit to the semi-trailer are typically provided by means of pluggable electrical cables and pneumatic hoses which connect from the rear of the tractor unit cab to the front of the semi-trailer.

Two air lines control the semi-trailer brakes. A main air supply line pressurizes the trailer's air tank and releases the trailer parking brakes which, in the absence of air pressure, are held on by spring pressure. The main air supply line is commonly known as the emergency air line and, being usually coloured red, is also referred to as the red air line. A second air line controls the semi-trailer service brakes which are activated when this air line is pressurized. This second air supply line is commonly known as the service air line and, being usually coloured yellow, is also known as the yellow air line.

In order to couple a semi-trailer to a tractor unit the tractor unit is reversed partially underneath the semi-trailer until the king-pin enters the socket within the fifth-wheel assembly and is locked in position by the moveable jaws automatically clamping around the king-pin.

After reversing a tractor unit to a semi-trailer and engaging the king pin within the fifth-wheel mechanism it is common for a driver to test that the king-pin has correctly engaged within the fifth-wheel mechanism and that the jaws of the fifth-wheel mechanism have correctly closed and locked. This test, commonly known as either a pull test or snatch test, typically involves selecting first gear and attempting to drive forwards, thereby pulling against the semi-trailer which will still have its parking brakes engaged by spring pressure as no air lines have yet been connected. The pull test is commonly accepted as demonstrating that a correct coupling of the king-pin within the fifth-wheel has occurred if the tractor unit cannot be moved relative to the semi-trailer.

During the process of reversing a tractor unit partially under a semi-trailer to couple the semi-trailer to the tractor unit it is possible for the king-pin to entirely miss the socket of the fifth-wheel mechanism. This can occur due to the height of the fifth-wheel being too low relative to the parked semi-trailer, in which case the king-pin can pass over the top of the fifth-wheel assembly, or by a sideways misalignment causing the king-pin to ride over the top surface of the fifth-wheel assembly to the side of the entry to the socket. When such a coupling error occurs it is possible for the semi-trailer to be resting upon the fifth-wheel mechanism with the king-pin positioned in front of the fifth-wheel assembly. When this situation occurs the semi-trailer is commonly referred to as being over-coupled.

Performing a pull test with an over-coupled semi-trailer can give the impression of the semi-trailer being correctly coupled as the tractor unit will not be able to move forwards due to being restrained by the semi-trailer king-pin in front of the fifth-wheel mechanism. Performing a test in reverse gear would reveal the coupling error but this additional test is often omitted.

After performing a pull test the driver typically leaves the cab and connects the air and electrical lines to the semi-trailer, normally having to climb onto the tractor unit chassis between the rear of the cab and the front of the semi-trailer.

If a semi-trailer is over-coupled when the red airline is connected the semi-trailer will be free to move relative to the tractor unit as the semi-trailer parking brakes are released. This may result in the driver being crushed between the front of the semi-trailer and rear of the cab if the semi-trailer rolls forwards or may result in the semi-trailer becoming detached from the tractor unit at a later time if the vehicle is driven away.

Some combinations of tractor unit and semi-trailer are operated with a very small gap between the front of the semi-trailer and the rear of the tractor unit cab. This situation usually occurs when the operator wishes to use a long semi-trailer yet keep the overall vehicle length within a certain limit. The small gap precludes the normal connection of service lines between the tractor unit and semi-trailer. Once the semi-trailer has been coupled to the tractor unit the size of the gap is insufficient for the driver to gain access between the front of the semi-trailer and the rear of the tractor unit. This situation generally requires a method of coupling a semi-trailer to a tractor unit commonly known as split coupling. Split coupling is an inherently dangerous procedure which involves connecting the air and electrical lines between a tractor unit and semi-trailer before the king-pin of the semi-trailer is locked within the fifth-wheel mechanism of the tractor unit. Split coupling generally involves reversing the tractor unit close to, or partially under, the front of a semi-trailer but stopping before the king-pin engages within the fifth-wheel socket. The driver then leaves the cab and manually operates pneumatic valves fitted to the semi-trailer which prevent pneumatic pressure from releasing the semi-trailer parking brakes. The driver then connects the pneumatic and electrical lines between the tractor unit and the semi-trailer in the normal manner. Once the pneumatic and electrical lines are connected the driver re-enters the cab and reverses the tractor unit until the king-pin engages and locks within the fifth-wheel socket. Split coupling is clearly more complicated than conventional coupling. The brake valves the driver needs to operate on the semi-trailer are not standardised and confusion on the part of the driver may result in a dangerous situation whereby the semi-trailer parking brakes are released when the semi-trailer is not coupled to the tractor unit.

It is common for drivers to forget to apply the tractor parking brake after performing a pull test as the impression during the pull test is that the parking brake is already applied because the semi-trailer brakes have not been released and the fifth-wheel coupling between the tractor unit and semi-trailer prevents vehicle movement. When the red airline is connected to the semi-trailer the semi-trailer parking brakes are released and only the tractor unit parking brakes prevent the vehicle from moving. If the tractor parking brake is not applied at this stage the vehicle will be free to move. It is not uncommon for drivers to be injured or killed when such an unexpected vehicle movement occurs and this situation also presents serious third party risks.

A system is disclosed in WO03020561 which prevents the application of fluid pressure to release the semi-trailer parking brakes unless the underside of the semi-trailer is in contact with the fifth-wheel plate and the fifth-wheel release arm is in the locked position. Although such a system would reduce some risks associated with over-coupled semi-trailers because it would prevent air being applied to the semi-trailer via the red air line, this system could conceivably introduce other dangers during split coupling as it would automatically cause the release of the semi-trailer brakes once the fifth-wheel locked, thereby preventing the driver from performing a pull test. A further shortcoming of the system described in WO03020561 is that a failure of either the sensor which detects that the semi-trailer underside is in contact with the fifth-wheel plate or the sensor which detects that the fifth-wheel release arm is in the locked position would cause the semi-trailer parking brakes to be applied. If such a failure occurred when the vehicle was moving a dangerous situation would be created as the semi-trailer brakes would be applied with no warning. US2008/0012695 discloses a detector arranged to detect whether a physical connection exists between a tractor portion and a trailer portion of a tractor/trailer vehicle.

### Summary of the Invention

Accordingly, the present invention provides a braking control system for a towing vehicle and trailer vehicle combination, each vehicle being equipped with pneumatic brakes controlled by the towing vehicle, the towing vehicle being connected to the trailer vehicle by separable and lockable coupling means, and the trailer vehicle brakes being connected to the towing vehicle brakes by means of separable air connectors, the system comprising a controller mountable in or on the towing vehicle, detector means associated with the coupling means for detecting locking thereof, and pneumatic control means regulating the pneumatic brake supply to the trailer, the controller being arranged to control operation of the pneumatic control means in response to the output of the detector means, characterised in that the controller is also connected to a parking brake sensor for sensing whether or not the parking brake of the towing vehicle has been applied, and is arranged to control operation of the pneumatic control means in response to the output of the detector means and the parking brake sensor.

Preferably, the trailer vehicle is of the type having parking brakes releasable pneumatically by the towing vehicle, and the controller is arranged to enable release of the trailer parking brakes only if the towing vehicle parking brake has been applied and the detector means detects locking of the coupling means.

According to one embodiment of the invention, the system further comprises a motion sensor for sensing if the towing vehicle is moving or stationary, and wherein, when the air connectors are connected, the controller is arranged to prevent application of the trailer vehicle brakes if the motion sensor indicates that the towing vehicle is moving and the detector means detects that the coupling means is unlocked. Preferably, tractor unit movement will be detected by monitoring the speedometer system of the tractor unit, otherwise any alternative means of determining tractor unit movement may be utilised.

Preferably the system comprises electronic control means whereby sensors cause the physical status of certain vehicle components or systems to be represented by electrical signals suitable for processing by the control system which in turn outputs electrical signals to control the associated system actuators and indicators. Other control system methods such as pneumatic or hydraulic control means may be employed.

An input to the control system is provided to enable monitoring of the tractor unit parking brake system to ascertain whether the tractor unit parking brake is engaged or released. Any form of switch or other device capable of providing a control signal indicating the engaged or released status of the tractor unit parking brake may be utilised to provide a control input to the system. If such a signalling device is already fitted to the tractor unit this may be utilised, otherwise a suitable signalling device may be added to the tractor unit parking brake system. It is usual for tractor units to be fitted with a parking brake switch and the electrical signal from such a switch may be utilised to ascertain the status of the tractor unit parking brake. The electrical output from a tractor unit parking brake switch may represent a given status of the parking brake with either an electrically on or off signal depending upon the design of the specific make and model of tractor unit.

A further aspect of the invention provides a switchable element fitted to the control system which can be set to cause the control system to respond correctly to the polarity of electrical signal derived from the parking brake monitoring circuit of the specific tractor unit to which the system is fitted.

A further input to the control system is provided to enable monitoring of fifth-wheel sensing means which provide a signal representing the coupled or uncoupled status of the semi-trailer and tractor unit combination.

Methods of determining and signalling the locked or unlocked status of a fifth-wheel mechanism are well known and are commercially available. They may comprise a single sensing element monitoring the position of the fifth-wheel release handle or may comprise a plurality of sensing elements monitoring various aspects of the fifth-wheel mechanism such as the presence of the king-pin within the fifth-wheel socket and the proximity of the trailer underside against the surface of the fifth-wheel mechanism. If such a sensing device is already fitted to the fifth-wheel mechanism this may be utilised, otherwise a suitable sensing device must be added to the fifth-wheel mechanism to provide a certain signal state when the fifth-wheel locking mechanism is in the locked position and a different signal state when the fifth-wheel locking mechanism is not locked. Where a plurality of fifth-wheel sensors are utilised it will be necessary to measure the output of each sensor and convert these signals to a single output which indicates whether or not the semi-trailer is correctly coupled and locked to the tractor unit. The electrical output from a fifth-wheel monitoring system may represent a particular status of the fifth-wheel mechanism with either an electrically on or off signal depending upon the design of the specific fifth-wheel monitoring system.

A further aspect of the invention provides a switchable element fitted to the control system which can be set to cause the control system to respond correctly to the polarity of the electrical signal from the specific fifth-wheel monitoring system.

Signalling means are preferably provided in order to inform the driver of the status of some or all of the various aspects of the system. Such signalling means may comprise visual or audible signals or a combination thereof and may include means of muting the audio output of radio or other entertainment apparatus within the cab to ensure that said audible signals may be heard. Signalling means would beneficially inform the driver if the fifth-wheel sensing system detects that a locked fifth-wheel mechanism of a tractor unit coupled to a semi-trailer became unlocked whilst the vehicle was in motion. In such a circumstance the control system would ensure that the parking brakes of the semi-trailer were not applied until the tractor unit had come to rest and the tractor unit parking brake was applied, thus avoiding the drag of the semi-trailer parking brakes either causing the semi-trailer to separate from the tractor unit or cause unexpected deceleration of the vehicle.

A further aspect of the invention provides control means preventing the service brakes of the semi-trailer from being applied when the tractor unit is moving and the fifth-wheel sensing system indicates that the fifth-wheel mechanism is not properly locked, thus avoiding the drag of the semi-trailer service brakes causing the semi-trailer to separate from the tractor unit.

A further aspect of the invention provides means of installing a semi-trailer braking control system to a tractor unit whereby modification of the standard braking system of the tractor unit is avoided and which allows the normal interchangeability of semi-trailers and the use of standard air hoses between the control system and the semi-trailer.

It will be apparent that the system functions described herein may be achieved by electronic control of electronically controlled braking systems or by devices able to manipulate the pneumatic or hydraulic or other actuation means of braking systems.

### Brief Description of the Drawings

In the drawings, which illustrate an exemplary embodiment of the invention:
Figure 1 is a diagrammatic top plan view of a tractor unit incorporating a system according to the invention;
Figure 2 is a schematic drawing showing certain components of the system connected to the emergency pneumatic connector of the tractor unit; and
Figure 3 is a schematic drawing showing certain components of the system connected to the service pneumatic connector of the tractor unit.

### Detailed Description of the Illustrated Embodiment

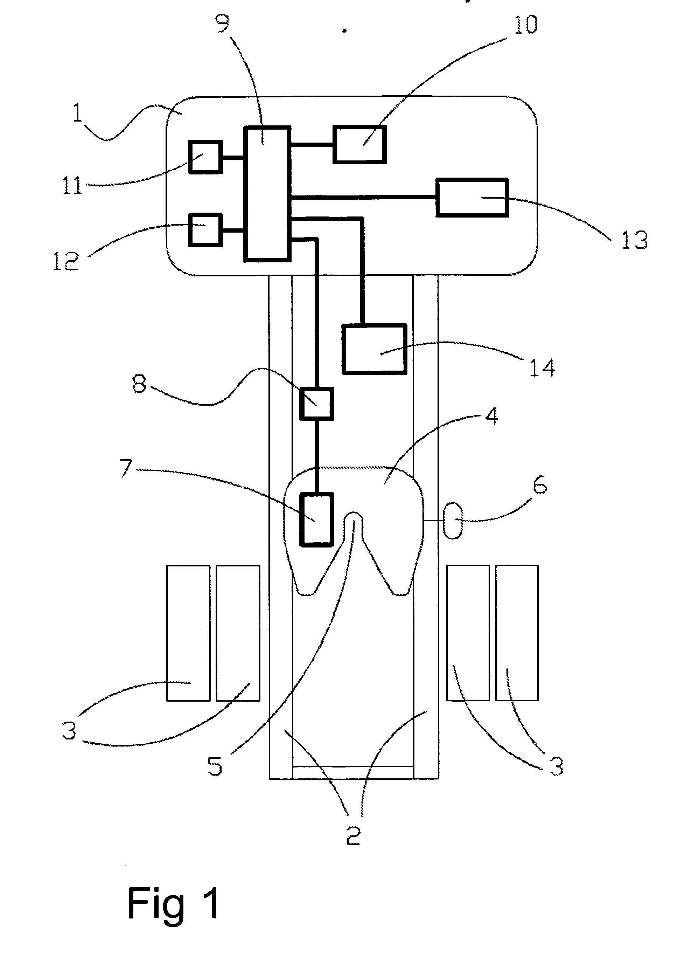

Figure 1 illustrates diagrammatically a typical tractor unit in top plan view having a cab 1 mounted above the front wheels, not shown. The tractor chassis has two beams 2 extending longitudinally and mounting the rear wheels 3.

A fifth-wheel mechanism 4 is mounted conventionally to the tractor chassis and includes a coupling socket 5 in which the king-pin of a semi-trailer, not shown, is locked in position when the tractor unit and semi-trailer are correctly coupled together. The fifth-wheel mechanism further includes a release handle 6, operation of which unlocks the king-pin of the semi-trailer, not shown, from the coupling socket 5 of the fifth-wheel mechanism 4 in order to allow separation of the tractor unit and semi-trailer.

Sensing means 7 provide indication of the locked or unlocked status of the fifth-wheel mechanism 4, either by use of a single sensor or a plurality thereof. Signals provided by fifth-wheel sensing means 7 are converted, if required, by a signal processing unit 8 into the correct format required by the system control unit 9, shown mounted within the cab 1.

Tractor unit parking brake sensor 10 provides a signal to control unit 9 indicating whether the parking brake is applied or released. The electrical polarity of the signal from parking brake sensor 10 may differ from one make of tractor unit to another, therefore polarity selector means 11 is provided within the control system 9 so that the response of control system 9 can be correctly set to match the electrical polarity of parking brake sensor 10.

Speed sensor 12 is connected to control system 9 and is provided in order to determine if the tractor unit is moving or stationary. Preferably, speed sensor 12 comprises an interface connected to the speedometer system of the tractor unit although any suitable method of speed sensing such as an inductive proximity sensor mounted adjacent to a drive shaft universal joint and sensing movement of the universal joint may be utilised.

Indicator means 13 are connected to, and controlled by, system control unit 9 and provide the driver with information regarding the status of inputs and outputs of the system. Indicator means 13 may comprise visual or audible indication means or a combination of both visual and audible indication means.

Pneumatic control module 14 provides pneumatic control means with which control system 9 is able to prevent or allow the application of pneumatic pressures supplied by the braking systems of the tractor unit being applied to the braking systems of a semi-trailer. The pneumatic control module 14 is provided with mounting means enabling attachment to the tractor unit convenient to the tractor unit pneumatic connectors rearward of the cab, and has flexible pneumatic pipes and connectors allowing connection of the pneumatic control module 14 to the tractor unit pneumatic connectors. Additional pneumatic connectors of a type substantially similar to the tractor unit pneumatic connectors enable an ordinary service air line and an ordinary emergency air line to be connected between the pneumatic control module 14 and a semi-trailer.

A typical braking system for a semi-trailer is provided with a pneumatic main supply line, typically referred to as the emergency air line, and a service brake line providing the braking control pressure for normal operation of the brakes when the vehicle is operating. Spring brakes are provided on at least the rearmost set of wheels (in the case of more than one axle on the trailer). The spring brakes contain a powerful spring which, in the absence of sufficient air pressure in the system will urge the brake shoes into contact with the brake drums (or the pads against the discs, in the case of disc brakes), thereby serving as parking brakes preventing movement of the trailer. The spring brakes typically include two pneumatic actuators, the first connected to the main supply line and arranged to act against the spring, whereby when there is sufficient pressure in the first cylinder the spring is compressed, thereby releasing the parking brake, while the second actuator is connected to the service brake system and is used to apply the brakes, Any break in the main supply line, whether resulting from deliberate or accidental disconnection of the hose connection or from rupture of the line, will automatically apply the spring operated brakes. Thus, the normal state of a trailer when disconnected from the tractor is with spring parking brakes applied.

When no semi-trailer is coupled to the tractor unit, control system 9 causes pneumatic control module 14 to prevent air pressure being applied to the emergency air line. When control system 9 detects that the fifth-wheel lock sensing means 7 has sensed that a semi-trailer has become correctly coupled to fifth-wheel mechanism 4 and that the tractor unit parking brake sensor 10 senses that the tractor unit parking brake is in the operated condition the control system 9 causes the pneumatic control module 14 to provide air pressure to the emergency air line. Air pressure to the emergency air line is maintained until the control system 9 detects that the fifth-wheel has become unlocked and the tractor unit parking brake is in the operated condition.

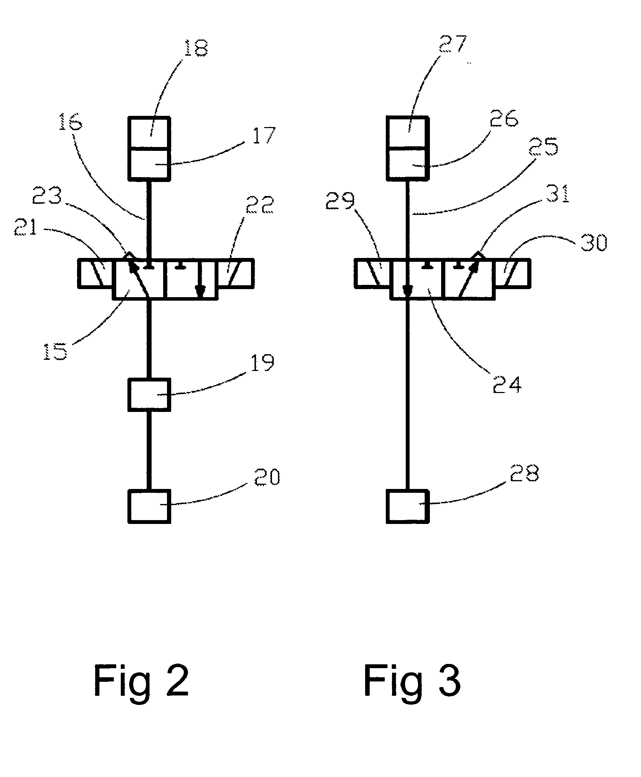

Referring to Figure 2, a three port two position control valve 15 is fitted with a flexible pneumatic pipe 16 itself fitted with a connector 17 suitable for connection to the fixed emergency pneumatic connector 18 of the tractor unit. Control valve 15 is also connected to pressure switch 19 in turn connected to pneumatic connector 20 itself substantially similar to fixed emergency pneumatic connector 18. A standard emergency air line may be connected between pneumatic connector 20 and a semi-trailer. Pneumatic connector 20 may incorporate a check valve to avoid loss of air pressure from the tractor unit braking system if no connection to a semi-trailer is made to pneumatic connector 20 when control valve 15 is switched to provide air pressure to pneumatic connector 20. Control valve 15 is controlled by two electrical solenoids, solenoid 21 and solenoid 22, both of which are controlled by electrical outputs from control unit 9. Electrical actuation of solenoid 21 with no simultaneous electrical actuation of solenoid 22 causes the control valve to adopt its open position, as shown in Figure 2, whereby air from pneumatic pipe 16 is not able to flow through the control valve and is therefore not able to cause the parking brakes of a semi-trailer connected to pneumatic connector 20 to be released and air within the semi-trailer main air system will vent to atmosphere through exhaust port 23 of solenoid 15. Electrical actuation of solenoid 22 with no simultaneous electrical actuation of solenoid 21 causes the control valve to move to its closed position whereby pneumatic pressure is passed to the semi-trailer main air system. Pressure switch 19 provides an electrical signal indicating the presence or absence of air pressure present at pneumatic connector 20 and is electrically connected to control system 9 which in turn causes said air pressure status to be displayed on indicator means 13.

Referring now to Figure 3, a three port two position control valve 24 is fitted with a flexible pneumatic pipe 25 itself fitted with a connector 26 suitable for connection to the fixed service pneumatic connector 27 of the tractor unit. Control valve 24 is also connected to pneumatic connector 28, itself substantially similar to fixed service pneumatic connector 27. A standard service air line may be connected between pneumatic connector 28 and a semi-trailer. Pneumatic connector 28 may be fitted with a check valve to prevent loss of air from the tractor unit braking system if no connection to a semi-trailer is made to pneumatic connector 28 when control valve 24 is switched to provide air pressure to air connector 28. Air valve 24 is controlled by two solenoids, solenoid 29 and solenoid 30, both of which are controlled by electrical outputs from control unit 9. Electrical actuation of solenoid 29 with no simultaneous electrical actuation of solenoid 30 causes the control valve to adopt its closed position, as shown in Figure 2, whereby air from pneumatic pipe 25 is able to flow through control valve 24 and thereby operate the service brakes of a semi-trailer connected to pneumatic connector 28. Electrical actuation of solenoid 30 with no simultaneous electrical actuation of solenoid 29 causes the control valve to move to its open position whereby air from pneumatic pipe 25 is unable to flow through control valve 24 and air within the semi-trailer service brake circuit is able to vent to atmosphere through exhaust port 31 thereby inhibiting operation of the semi-trailer service brakes.

It will be understood that, while there are references throughout the specification to "semi-trailer", the invention is not limited to articulated, or tractor and semi-trailer, vehicles, but is equally applicable to all trailer types having pneumatic brakes controlled by the towing vehicle.

## Claims

1. A braking control system for a towing vehicle and trailer vehicle combination, each vehicle being equipped with pneumatic brakes controlled by the towing vehicle, the towing vehicle being connected to the trailer vehicle by separable and lockable coupling means (4), and the trailer vehicle brakes being connected to the towing vehicle brakes by means of separable air connectors, the system comprising a controller (9) mountable in or on the towing vehicle, detector means (7) associated with the coupling means for detecting locking thereof, and pneumatic control means (14) regulating the pneumatic brake supply to the trailer, the controller (9) being arranged to control operation of the pneumatic control means (14) in response to the output of the detector means (7), **characterised in that** the controller is also connected to a parking brake sensor (10) for sensing whether or not the parking brake of the towing vehicle has been applied, and is arranged to control operation of the pneumatic control means (14) in response to the output of the detector means (7) and the parking brake sensor (10).

2. A braking control system according to Claim 1, wherein the trailer vehicle has parking brakes releasable pneumatically by the towing vehicle, and the controller (9) is arranged to enable release of the trailer parking brakes only if the towing vehicle parking brake has been applied and the detector means (7) detects locking of the coupling means.

3. A braking control system according to Claim 1 or 2, further comprising a motion sensor (12) for sensing if the towing vehicle is moving or stationary, and wherein, when the air connectors are connected, the controller (9) is arranged to prevent application of the trailer vehicle brakes if the motion sensor (12) indicates that the towing vehicle is moving and the detector means (7) detects that the coupling means is unlocked.

4. A braking control system according to Claim 3, wherein the controller (9) is further arranged to apply the trailer parking brakes when motion of the towing vehicle ceases.

5. A braking control system according to any preceding claim, wherein the trailer vehicle is a semi-trailer and the coupling means (4) is a fifth-wheel coupling.

6. A braking control system according to any preceding claim, wherein the separable air connectors comprise a pneumatic pressure supply line and a braking control line, and the pneumatic control means (14) comprises a solenoid-operable pneumatic valve (15) in the pressure supply line.

7. A braking control system according to Claim 6, which includes a pressure switch (19) connected to the controller for signalling pressurisation of the pressure supply connector.

8. A braking control system according to any of Claims 1 to 5, wherein the separable air connectors comprise a pneumatic pressure supply line and a braking control line, and the pneumatic control means (14) comprises a solenoid-operable pneumatic valve (24) in the braking control line.

9. A braking control system according to any preceding claim, further comprising signalling means (13) arranged to inform the driver of the towing vehicle of the status of at least some aspects of the system.

## Patentansprüche

1. Bremssteuersystem für eine Kombination aus einem ziehenden Fahrzeug und einem gezogenen Fahrzeug, wobei jedes Fahrzeug mit durch das ziehende Fahrzeug gesteuerten pneumatischen Bremsen ausgestattet ist, das ziehende Fahrzeug mit dem gezogenen Fahrzeug durch eine trennbare und verriegelbare Kupplungseinrichtung (4) verbunden ist, und die Bremsen des gezogenen Fahrzeugs mit den Bremsen des ziehenden Fahrzeugs durch trennbare Pneumatikkupplungen verbunden sind, wobei das System ein Steuergerät (9) umfasst, das in oder an dem ziehenden Fahrzeug montierbar ist, sowie eine der Kupplungseinrichtung zugeordnete Erfassungseinrichtung (7) zum Erfassen des Verriegelungszustands derselben, und pneumatische Steuerungsmittel (14), welche die pneumatische Bremsbeaufschlagung des gezogenen Fahrzeugs regulieren, wobei das Steuergerät (9) derart konfiguriert ist, um den Betrieb der pneumatischen Steuerungsmittel (14) in Abhängigkeit des Ausgangs der Erfassungseinrichtung (7) zu steuern, **dadurch gekennzeichnet, dass** das Steuergerät ferner mit einen Parkbremssensor (10) verbunden ist, um zu erfassen, ob die Parkbremse des ziehenden Fahrzeugs angezogen ist oder nicht, und konfiguriert ist, um den Betrieb der pneumatischen Steuerungsmittel (14) in Abhängigkeit des Ausgangs der Erfassungseinrichtung (7) und des Parkbremssensors (10) zu steuern.

2. Bremssteuersystem nach Anspruch 1, bei denen das gezogene Fahrzeug Parkbremsen aufweist, die pneumatisch durch das ziehende Fahrzeug lösbar sind und das Steuergerät (9) konfiguriert ist, um ein Lösen der Parkbremsen des gezogenen Fahrzeugs lediglich dann zu gestatten, wenn die Parkbremse des ziehenden Fahrzeugs angezogen ist und die Erfassungseinrichtung (7) den Verriegelungszustand der Kupplungseinrichtung feststellt.

3. Bremssteuersystem nach Anspruch 1 oder 2, weiterhin umfassend einen Bewegungssensor (12) zum Erfassen, ob das ziehende Fahrzeug sich bewegt oder steht, und wobei, wenn die Pneumatikkupplungen verbunden sind, dass Steuergerät (9) konfiguriert ist, um die Betätigung der Bremsen des gezogenen Fahrzeugs zu verhindern, wenn der Bewegungssensor (12) anzeigt, dass sich das ziehende Fahrzeug bewegt und die Erfassungseinrichtung (7) feststellt, dass die Kupplungseinrichtung entriegelt ist.

4. Bremssteuersystem nach Anspruch 3, bei dem das Steuergerät (9) weiterhin konfiguriert ist, um die Parkbremsen des gezogenen Fahrzeugs anzuziehen, wenn die Bewegung des ziehenden Fahrzeugs aufhört.

5. Bremssteuersystem nach einem der vorgenannten Ansprüche, bei dem das gezogene Fahrzeug ein Sattelauflieger ist und die Kupplungseinrichtung (4) eine Aufsattelkupplung ist.

6. Bremssteuersystem nach einem der vorgenannten Ansprüche, bei dem die trennbaren Pneumatikkupplungen eine Pneumatikdruckversorgungsleitung und eine Bremssteuerleitung umfassen, und die pneumatischen Steuerungsmittel (14) ein solenoidbetätigtes Pneumatikventil (15) in der Druckversorgungsleitung umfassen.

7. Bremssteuersystem nach Anspruch 6, das einen mit dem Steuergerät verbundenen Druckschalter (19) aufweist, um eine Druckbeaufschlagung der Druckversorgungskupplung zu signalisieren.

8. Bremssteuersystem nach einem der Ansprüche 1 bis 5, bei dem die trennbaren Pneumatikkupplungen eine Pneumatikdruckversorgungsleitung und eine Bremssteuerleitung umfassen, und die pneumatischen Steuerungsmittel (14) ein solenoidbetätigtes Pneumatikventil (24) in der Bremssteuerleitung umfassen.

9. Bremssteuersystem nach einem der vorgenannten Ansprüche, weiterhin umfassend eine Anzeigeeinrichtung (13), die konfiguriert ist, um den Fahrer des ziehenden Fahrzeugs über den Zustand zumindest einiger Aspekte des Systems zu informieren.

## Revendications

1. Système de commande de freinage pour un véhicule de remorquage et un véhicule remorque combinés, chaque véhicule étant équipé de freins pneumatiques commandés par le véhicule de remorquage, le véhicule de remorquage étant relié au véhicule remorque par des moyens d'accouplement détachables et verrouillables (4), et les freins du véhicule-remorque étant reliés aux freins du véhicule de remorquage au moyen de raccords pneumatiques séparables, le système comprenant une unité de commande (9) apte à être montée dans ou sur le véhicule de remorquage, des moyens de détection (7) associés aux moyens d'accouplement pour en détecter le verrouillage, et des moyens de commande pneumatique (14) régulant l'alimentation des freins pneumatiques de la remorque, l'unité de commande (9) étant agencée pour commander le fonctionnement des moyens de commande pneumatique (14) en réponse à la sortie des moyens de détection (7), **caractérisé par le fait que** l'unité de commande est également reliée à un détecteur de frein de stationnement (10) destiné à détecter si le frein de stationnement du véhicule de remorquage a été ou non actionné, et est agencée pour commander le fonctionnement des moyens de commande pneumatique (14) en réponse à la sortie des moyens de détection (7) et du détecteur de frein de stationnement (10).

2. Système de commande de freinage selon la revendication 1, dans lequel le véhicule remorque a des freins de stationnement libérables pneumatiquement par le véhicule de remorquage, et l'unité de commande (9) est agencée pour permettre une libération des freins de stationnement de la remorque uniquement si le frein de stationnement du véhicule de remorquage a été actionné et si les moyens de détection (7) détectent le verrouillage des moyens d'accouplement.

3. Système de commande de freinage selon l'une des revendications 1 ou 2, comprenant en outre un détecteur de mouvement (12) destiné à détecter si le véhicule de remorquage est en mouvement ou immobile, et dans lequel, lorsque les raccords pneumatiques sont raccordés, l'unité de commande (9) est agencée pour empêcher l'actionnement des freins du véhicule remorque si le détecteur de mouvement (12) indique que le véhicule remorquage est en mouvement et si les moyens de détection (7) détectent que les moyens d'accouplement sont déverrouillés.

4. Système de commande de freinage selon la revendication 3, dans lequel l'unité de commande (9) est en outre agencée pour actionner les freins de stationnement de la remorque lorsque le mouvement du véhicule de remorquage cesse.

5. Système de commande de freinage selon l'une quelconque des revendications précédentes, dans lequel le véhicule remorque est une semi-remorque et les moyens d'accouplement (4) sont un attelage pivotant.

6. Système de commande de freinage selon l'une quelconque des revendications précédentes, dans lequel les raccords pneumatiques séparables comprennent une conduite d'alimentation de pression pneumatique et une conduite de commande de freinage, et les moyens de commande pneumatique (14) comprennent une électrovanne pneumatique (15) dans la conduite d'alimentation de pression.

7. Système de commande de freinage selon la revendication 6, lequel comprend un manostat (19) relié à l'unité de commande pour signaler une mise sous pression du raccord d'alimentation de pression.

8. Système de commande de freinage selon l'une quelconque des revendications 1 à 5, dans lequel les raccords pneumatiques séparables comprennent une conduite d'alimentation de pression pneumatique et une conduite de commande de freinage, et les moyens de commande pneumatique (14) comprennent une électrovanne pneumatique (24) dans la conduite de commande de freinage.

9. Système de commande de freinage selon l'une quelconque des revendications précédentes, comprenant en outre des moyens de signalisation (13) agencés pour informer le conducteur du véhicule de remorquage de l'état d'au moins certains aspects du système.
